# EUROPEAN PATENT APPLICATION

(11) **EP 1 279 538 A1**
(43) Date of publication of application: **29.01.2003**
(21) Application number: 02255154.3
(22) Date of filing: 23.07.2002
(51) Int. Cl.: B60J 7/08, B60P 1/48

(54) **Container cover (skip)**

(30) Priority: 27.07.2001 GB 0118363
(71) Applicant: Wood, Robert Arthur, Palm City, FL 34990 (US)
(72) Inventor: Wood, Robert Arthur, Palm City, FL 34990 (US)
(74) Representative: Bailey, David Martin

(57) **Abstract**

The present invention relates to a cover for a container carried by a vehicle. In particular, it relates to a cover for a demountable material carrying container on a truck. There is described a cover assembly for the container of a vehicle carrying a demountable container wherein the container is demountable by means of being hung below a pivotable gantry comprising at least two loading arms. The cover assembly comprises opposed pairs of roller arms and pivot arms, each arm of each pair being pivotally mounted on opposite sides of a respective loading arm. Mounted between the ends of the roller arms remote the pivoting point is a roller assembly including a roller bar upon which is rolled a sheet cover having first and second ends, the first of which ends is secured to the roller bar and the second of which ends is secured to a pivot arm cross bar mounted between the ends of the pivot arms remote the pivot arm pivoting point.

## Description

The present invention relates to a cover for a container carried by a vehicle. In particular, it relates to a cover for a demountable material carrying container on a truck.

It is well known to provide a cover for the material carrying container of a truck such as a tipper truck or roll-on-off open top rubbish lorry. Such covers are particularly useful when transporting loose materials such as sand, gravel, dirt or rubbish, to prevent load being blown from the container by the wind. Additionally, the cover protects the load from contamination. Many examples of container covers are known in the prior art ranging from purely manually applied covers to cover arrangements involving a degree of mechanical automation. A popular arrangement for covering a truck container is to use a tarpaulin (or 'tarp') or other flexible cover, mounted upon a roller assembly adjacent one end of the truck container. The tarp is pulled from one end of the truck to the other by means of a front-to-rear pivot arm assembly.

Whilst mechanical arrangements are well known in the field of tipper trucks and roll-off hook loader or cable lorries, very few solutions have been proposed for vehicles having a demountable container transferred to and from the vehicle by means of a pivotable gantry. Such containers are usually referred to as skips and the vehicles that transport them are usually referred to as skip lorries or lugger trucks.

Most commonly, a cover is placed over the skip manually and then retained by means of cooperating hooks and loops provided on the skip and cover. In view of the fact that skips are usually heavily loaded with waste materials, it is far from ideal to require the operator of a skip lorry to have to apply the cover manually by hauling the cover over the top of the skip.

One known semi-mechanical method is described in US 6 129 501 in which a cover or tarpaulin is unrolled from a roller assembly mounted behind the cab of the truck. However, the cover must still be unrolled by the operator and pulled over the skip and its contents, before being held in place by means of a loop attached to the cover being hooked over a hook on the rear of the skip. As such, the proximity of the operator to the contents of the skip is still considered to be unsatisfactory.

The present invention has been devised in order to address the deficiencies in the prior art

According to the present invention, in a first aspect, there is provided a cover assembly for the container of a vehicle carrying a demountable container wherein the container is demountable by means of being hung below a pivotable gantry comprising at least two loading arms. The cover assembly comprises opposed pairs of roller arms and pivot arms, each arm of each pair being pivotally mounted on opposite sides of a respective loading arm. Mounted between the ends of the roller arms remote the pivoting point is a roller assembly including a roller bar upon which is rolled a sheet cover having first and second ends, the first of which ends is secured to the roller bar and the second of which ends is secured to a pivot arm cross bar mounted between the ends of the pivot arms remote the pivot arm pivoting point.

In a first embodiment, the pivot and roller arms are biased away from the upper ends of respective loading arms, suitably, but not exclusively, by means of torsion springs and/or gravity and the roller assembly includes a motor assembly adapted to roll the sheet cover onto the roller bar. Typically, the motor is electric, hydraulic or pneumatic. Suitably, the motor is mounted internally of the roller bar or externally to one end of the roller bar and may be accompanied by such gearing as may be necessary having regard to the specification of the motor.

In an alternative embodiment, the roller assembly includes a spring assembly adapted to bias the sheet cover into the rolled configuration; and the roller and pivot arms are powered to move between positions adjacent the upper ends of loading arms and positions in which they are pivoted away from the loading arms. Typically, such powering of the arms is by means of hydraulic or pneumatic cylinders.

In a preferred embodiment, each of said pair of roller arms is pivotally mounted at a respective pivoting point on the forward-facing side of each loading arm substantially adjacent the lower end thereof and each of said pair of pivot arms is pivotally mounted at respective pivoting points on the rearward-facing side (that is, facing the rear of the vehicle) of the loading arm at a point generally intermediate the upper and lower ends thereof.

The assembly of the present invention is equally applicable for modification to an existing vehicle as it is for inclusion in new vehicles. Accordingly, in a second aspect, the present invention provides a vehicle adapted to carry a container demountable therefrom by means of a pivotable gantry from which the container can be suspended, wherein the vehicle further includes a cover assembly as described above.

In a third aspect, there is also provided a method of covering a container on a vehicle of the skip lorry type, the method comprising providing a cover assembly as described above.

In a fourth aspect, the present invention provides a covering assembly for covering the open top of a container of a demountable container carrying vehicle wherein said container is demountable by means of a pivotable gantry having at least two loading arms, said covering assembly comprising: (a). a roller arm assembly including a pair of roller arms pivotable about one end thereof and supporting a roller element extending substantially transversely between said pair of roller arms at the opposite end of said pivot end; and (b). a pivot arm assembly including a pair of pivot arms pivotable about one end thereof and supporting a cover support element extending substantially transversely between said pivot arms at the opposite end of said pivot end, wherein said roller arm assembly and said pivot arm assembly are each pivotally mounted to said pivotable gantry and work in cooperation to extend and retract said flexible cover over the open top of said demountable container; said flexible cover has a first end mounted to said roller element and a second end mounted to said cover support element; and said roller element includes a rolling means.

Suitably, the roller arms and/or said pivot arms are biased by spring force; by at least one hydraulic or pneumatic cylinder or electric motor driven actuator; or by weight and gravity force.

Suitably, said rolling means is an electric, hydraulic or pneumatic motor associated with the roller element; or includes a spring assembly adapted to bias said flexible cover into a rolled configuration

Alternatively, said rolling means comprises a manual crank assembly including chains and sprockets and/or belts and pulleys to bias the roller element.

Preferably, the roller arms and/or pivot arms are extendible to cover varying length and height containers.

In a fifth aspect, there is provided a skip lorry or lugger truck comprising: (a) a bed attached to a chassis for supporting a demountable container; (b) a pivotable gantry having at least two loading arms, said loading arms having an element for attaching to a demountable container for loading onto said truck bed; (c) at least one actuator for moving said loading arms; and (d) a covering assembly mounted to said loading arms, said covering device including a pair of pivotally mounted arm sets that work in cooperation to extend and retract a flexible cover over the open top of said demountable container.

Preferably, said at least two loading arms each have forward-facing and rearward-facing sides.

Preferably said pair of pivotally mounted arm sets includes a set of roller arms and pivot arms pivotally mounted to the forward-facing and rearward-facing sides of said loading arms.

Preferably said flexible cover of said covering assembly having a first end attached to a roller element and a second end attached to a cover support element, said roller element and said cover support element adjacent upper end of loading arms and parallel loading arm cross-bar when in uncovered position.

According to a sixth aspect, the present invention provides a method for covering the open top of a container of a demountable container carrying vehicle with a flexible cover, said method comprising providing a vehicle having a bed and pivotable gantry and a covering assembly mounted to said pivotable gantry; wherein said covering assembly includes a pair of pivotally mounted arm sets that work in cooperation to extend and retract a flexible cover over the open top of said demountable container; and wherein said container is loaded onto vehicle bed, by pivoting gantry over a loaded container at ground level and lifting said container onto said bed of vehicle; actuating rolling means of said covering assembly to extend said flexible cover over said loaded container and secured with said pivotally mounted arm sets; and actuating said rolling means of said covering assembly to retract said flexible cover and store it protected behind cross-bar of said loading arms while container is tipped and unloaded.

Suitably an operator actuates said rolling means from ground level to extend and retract said flexible cover over the open top of said demountable container when said container is supported by said vehicle bed.

The above and other aspects of the present invention will now be described in further detail, by way of example only, with reference to the accompanying drawings, in which:
Figure 1 is a schematic side view showing the principle features of a skip lorry;
Figure 2 is a schematic side view of an embodiment of a cover assembly in accordance with the present invention in a retracted configuration;
Figure 3 shows a schematic side view of the embodiment of Figure 2 in a first partially extended configuration;
Figure 4 is a schematic side view of the embodiment of Figure 2 in a second partially extended configuration;
Figure 5 is a schematic side view of the embodiment of Figure 2 in a fully extended configuration;
Figure 6 is a side view showing in detail, the principle features of the embodiment of Figure 2, in the retracted configuration; and

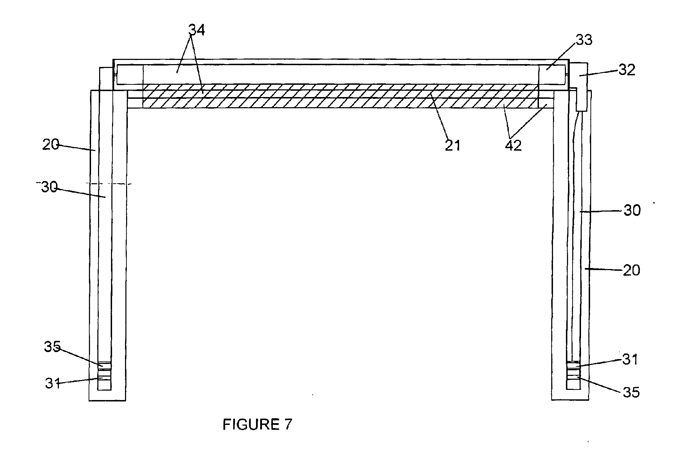

Figure 7 is a view from the rear of the arrangement shown in Figure 6.

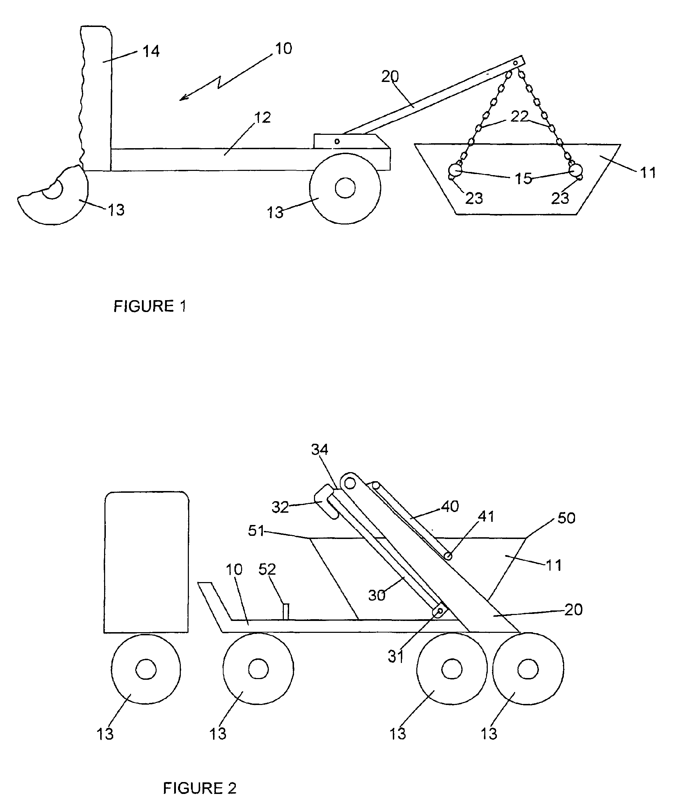

By way of introduction, a lorry 10 adapted to transport a skip 11 is shown in Figure 1. The lorry includes a chassis 12 carried upon front and rear road wheels 13. The lorry also includes a cab 14. The skip 11 is of generally trapezoidal shape in side view. Each side of the skip 11 is provided with two hooking points 15.

The chassis 12 of the lorry 10 also carries a pivotable loading arm 20 at each side thereof. The loading arms 20 may be coupled by means of a cross bar 21 (obscured in Figure 1), which may include a pad 25 on the underside thereof to reduce wear to the cover during extension and retraction. A further pad may also be sewn onto the cover itself. Secured to the upper end of each of the loading arms 20 are two chains 22 terminating in shackles or loops 23 each adapted to engage and be retained by a respective hooking point 15. The loading arms 20 are powered, typically by means of hydraulic rams (not shown). As the loading arms 20 pivot in an anti-clockwise sense (as viewed in Figure 1), the skip 11 is raised from the ground and swung over to rest on the chassis 12.

The assembly of the present invention does not, in any way, affect this fundamental operation of the skip lorry. As such, the cover assembly is equally suitable for retrofitting to existing vehicles as it is for inclusion with new skip lorries.

Turning to Figure 2, an embodiment of the apparatus of the present invention includes opposed pairs of roller arms 30 and pivot arms 40, each arm 30,40 of each pair being pivotally mounted on opposite sides of a respective loading arm. In this context, the arms may be mounted upon the forward and rearward-facing edges of the loading arms, or on the side faces of the loading arms, towards said forward and rearward-facing edges thereof.

In the embodiment shown, each of said pair of roller arms 30 is pivotally mounted at a respective pivoting point 31 on the forward-facing side of each loading arm 20 adjacent the chassis 12. Each of said pair of pivot arms 40 is pivotally mounted at respective pivoting points 41 on the opposite side of the loading arm at a point generally intermediate the two ends of the loading arm 20. Those skilled in the art will appreciate that the precise location of the pivoting points 31,41 and the length of the roller and pivot arms 30,40 can be varied, in particular, having regard to the positioning of the loading arms 20 upon the chassis and the size of the skip 11 and the position in which the skip is placed on the chassis, as will become apparent hereinafter

Mounted between the ends of the roller arms 30 remote the pivoting point 31 is a roller assembly 32. Roller assembly 32 includes a roller bar 33 upon which is rolled a cover or tarpaulin ('tarp') 34. Cover 34 has two ends, the first of which ends is secured to the roller bar 33. The second end of the cover 34 is secured to a pivot arm cross bar 42 mounted between the ends of the pivot arms 40.

Whilst Figure 2 illustrates the arrangement in a retracted configuration with the roller arms 30 and pivot arms 40 aligned with the loading arms 20, both the pairs of roller arms 30 and the pairs of pivot arms 40 are actually biased away from this position. Pivot arms 40 are typically biased by means of a torsion spring 45 operating at each pivot point 41. Roller arms 30 are biased by means of gravity acting on the weight of the roller assembly. A torsion spring 35 may be used at pivot point 31 in the opposite direction to gravity to counter the weight of the roller assembly. However the biasing is achieved, it is preferred that the biasing of the pivot arms 40 exceeds that of the roller arms 30 as will become apparent.

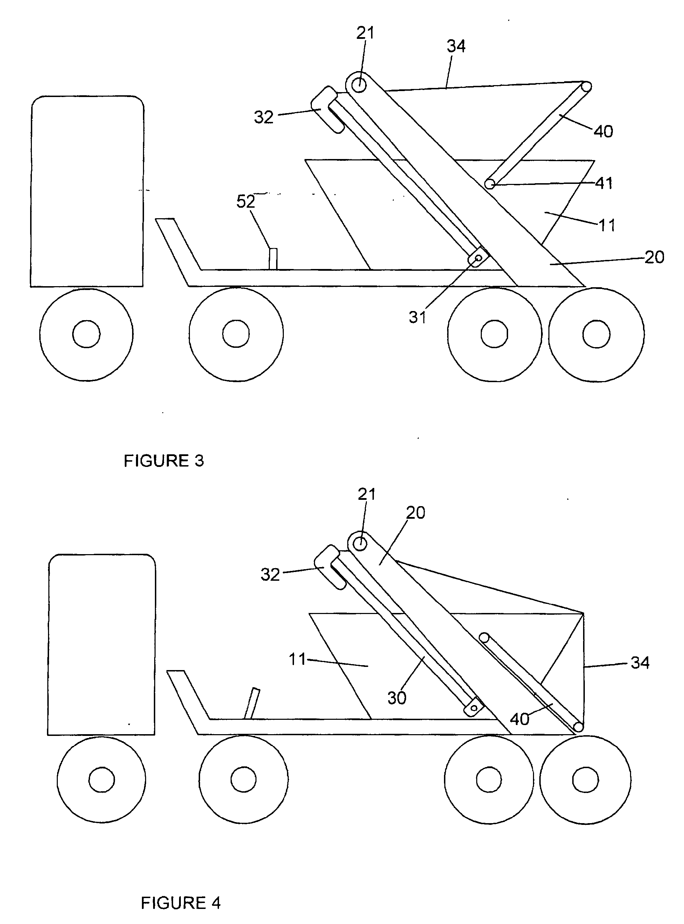

The biasing of the roller and pivot arms 30,40 will tend to cause the cover 34 to be unrolled from the roller bar 33. If the biasing of the pivot arms 40 exceeds that of the roller arms 30, pivot arms 40 will move preferentially, towards the rear of the vehicle, as is shown in Figure 3 in an intermediate configuration and in Figure 4 in a final configuration in which each pivot arm 40 has rotated through substantially 180° to lie in the opposite direction against the upper surface of its respective loading arm 20 or a pivot arm rest mounted thereon. For example, the pivot arms may be spaced from the loading arms by means of hooks 53 which can also be used as a chain restraint when the vehicle is not carrying a skip. As will be seen, the cover 34 is held firmly over the rear edge 50 of the skip 11.

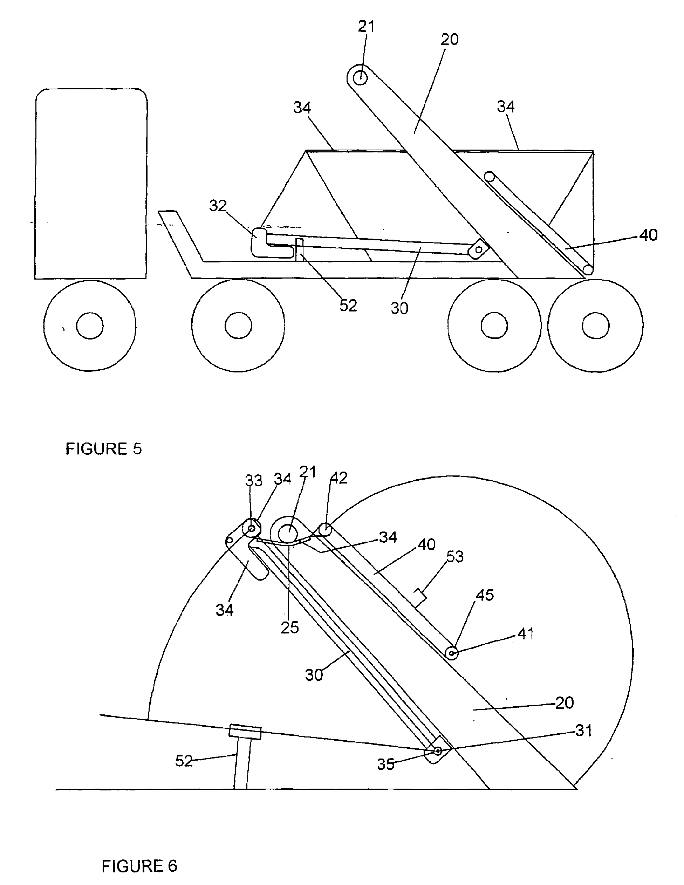

Roller arms 30 are then caused to fall under gravity or any positive biasing provided as the cover is wound off the roller bar by the motor, to take the cover 34 over the front edge 51 of the skip, until the roller arm 30 or roller assembly 34 contacts the chassis 12 or, more preferably, as shown in Figure 5, a rest 52 to support the roller assembly 34 above the chassis to avoid possible damage to the assembly. This is the fully extended configuration.

Roller arms 30 may be telescopic to extend in length if the roller assembly contacts an oversize skip container 11 or a load that is piled high within the skip as roller arms are lowered to the fully extended configuration.

It will be appreciated that, in practice, both the roller and pivot arms may move simultaneously rather than sequentially as described above and illustrated in the Figures.

The roller assembly 34 includes a motor assembly, not shown in detail, in order to roll the cover 34 on and off the roller bar 33. The motor may be electric, hydraulic or pneumatic and may be mounted internally of the roller bar 33 or externally, to one end of the roller bar 33 and may be accompanied by such gearing as may be necessary having regard to the specification of the motor.

To one of ordinary skill in the art, it will be appreciated that restraining means will be required to restrain rotation of the roller bar 33 when in the retracted configuration (Figure 2) and also to slow the movement of the roller and pivot arms 30,40 from their positions in the retracted configuration to their positions in the extended configuration The required restraining is typically achieved through control of the motor assembly. Those skilled in the art will be readily able to devise alternative arrangements, particularly including mechanical locking and clutch assemblies.

In an alternative embodiment, not shown, the positions of the roller arms 30 with the roller assembly 32 and the pivot arms 40 are reversed. That is to say, the pivot arms 40 are each provided on the forward-facing side of the respective loading arms 20 and the roller arms 30 are each mounted on the rearward-facing side of the respective loading arms 20.

In a further alternative embodiment, not shown, the roller assembly includes a spring assembly adapted to bias the cover 34 into the rolled configuration and the roller and pivot arms 30,40 are powered to move from their positions as shown in Figure 2 to those in Figure 5. Such powering of the arms 30,40 may be by means of hydraulic or pneumatic cylinders or any other suitable means.

## Claims

1. A cover assembly for the container of a vehicle carrying a demountable container wherein the container is demountable by means of a pivotable gantry comprising at least two loading arms; which cover assembly comprises opposed pairs of roller arms and pivot arms, each arm of each pair being pivotally mounted on opposite sides of a respective loading arm, wherein mounted between the ends of the roller arms remote the pivoting point is a roller assembly including a roller bar upon which is rolled a sheet cover having first and second ends, the first of which ends is secured to the roller bar and the second of which ends is secured to a pivot arm cross bar mounted between the ends of the pivot arms remote the pivot arm pivoting point.

2. A cover assembly as claimed in claim 1 wherein the pivot and roller arms are biased away from the upper ends of respective loading arms and the roller assembly includes a motor assembly to roll the sheet cover onto the roller bar.

3. A cover assembly as claimed in claim 2 wherein the pivot and roller arms are biased by means of torsion springs and/or gravity.

4. A cover assembly as claimed in claim 2 or claim 3 wherein the motor is electric, hydraulic or pneumatic.

5. A cover assembly as claimed in any one of claims 2 to 4 wherein the motor is mounted internally of the roller bar or externally to one end of the roller bar.

6. A cover assembly as claimed in claim 1 wherein the roller assembly includes a spring assembly adapted to bias the sheet cover into the rolled configuration; and the roller and pivot arms are powered to move between positions adjacent the upper ends of loading arms and positions in which they are pivoted away from the loading arms.

7. A cover assembly as claimed in claim 6 wherein the roller and pivot arms are powered by means of hydraulic or pneumatic cylinders.

8. A cover assembly for covering the open top of a container of a demountable container carrying vehicle wherein said container is demountable by means of a pivotable gantry having at least two loading arms, said covering assembly comprising:
a. a roller arm assembly including a pair of roller arms pivotable about one end thereof and supporting a roller element extending substantially transversely between said pair of roller arms at the opposite end of said pivot end;
b. a pivot arm assembly including a pair of pivot arms pivotable about one end thereof and supporting a cover support element extending substantially transversely between said pivot arms at the opposite end of said pivot end, wherein
said roller arm assembly and said pivot arm assembly are each pivotally mounted to said pivotable gantry and work in cooperation to extend and retract said flexible cover over the open top of said demountable container;
said flexible cover has a first end mounted to said roller element and a second end mounted to said cover support element; and
said roller element includes a rolling means.

9. The cover assembly according to claim 8 wherein, said roller arms and/or said pivot arms are biased by spring force.

10. The cover assembly according to claim 8 wherein, said roller arms and/or said pivot arms are biased by at least one hydraulic or pneumatic cylinder or electric motor driven actuator.

11. The cover assembly according to claim 8 wherein, said roller arms and/or said pivot arms are biased by weight and gravity force.

12. The cover assembly according to any one of claims 8 to 11 wherein, said rolling means is an electric, hydraulic or pneumatic motor associated with the roller element.

13. The cover assembly according to any one of claims 8 to 11 wherein, said rolling means includes a spring assembly adapted to bias said flexible cover into a rolled configuration.

14. The cover assembly according to any one of claims 8 to 11 wherein, said rolling means is a manual crank assembly including chains and sprockets and/or belts and pulleys to bias the roller element.

15. The cover assembly according to any one of claims 8 to 14 wherein the roller arms and/or pivot arms are extendible to cover varying length and height containers.

16. A cover assembly as claimed in any preceding claim wherein each of said pair of roller arms is pivotally mounted at a respective pivoting point on the forward-facing side of each loading arm substantially adjacent the end thereof and each of said pair of pivot arms is pivotally mounted at respective pivoting points on the rearward-facing side (that is, facing the rear of the vehicle) of the loading arm at a point generally intermediate the upper and lower ends thereof.

17. A cover assembly as claimed in any one of claims 1 to 15 wherein each of said pair of pivot arms is pivotally mounted at a respective pivoting point on the forward-facing side of each loading arm substantially adjacent the end thereof and each of said pair of roller arms is pivotally mounted at respective pivoting points on the rearward-facing side (that is, facing the rear of the vehicle) of the loading arm at a point generally intermediate the upper and lower ends thereof.

18. A skip lorry or lugger truck comprising:
a. a bed attached to a chassis for supporting a demountable container;
b. a pivotable gantry having at least two loading arms, said loading arms having an element for attaching to a demountable container for loading onto said truck bed;
c. at least one actuator for moving said loading arms; and
d. a covering assembly mounted to said loading arms, said covering device including a pair of pivotally mounted arm sets that work in cooperation to extend and retract a flexible cover over the open top of said demountable container.

19. A skip lorry or lugger truck according to claim 18 wherein, said at least two loading arms each have forward-facing and rearward-facing sides.

20. A skip lorry or lugger truck according to claim 19 wherein, said pair of pivotally mounted arm sets includes a set of roller arms and pivot arms pivotally mounted to the forward-facing and rearward-facing sides of said loading arms.

21. A skip lorry or lugger truck according to claim 18 wherein, said flexible cover of said covering assembly having a first end attached to a roller element and a second end attached to a cover support element, said roller element and said cover support element adjacent upper end of loading arms and parallel loading arm cross-bar when in uncovered position.

22. A vehicle adapted to carry a container demountable therefrom by means of a pivotable gantry from which the container can be suspended, wherein the vehicle further includes a cover assembly as claimed in any one of claims 1 to 17.

23. A method for covering the open top of a container of a demountable container carrying vehicle with a flexible cover, said method comprising:
a. providing a vehicle having a bed and pivotable gantry and a covering assembly mounted to said pivotable gantry; wherein
said covering assembly includes a pair of pivotally mounted arm sets that work in cooperation to extend and retract a flexible cover over the open top of said demountable container; and wherein
said container is loaded onto vehicle bed, by pivoting gantry over a loaded container at ground level and lifting said container onto said bed of vehicle;
actuating rolling means of said covering assembly to extend said flexible cover over said loaded container and secured with said pivotally mounted arm sets; and
actuating said rolling means of said covering assembly to retract said flexible cover and store it protected behind cross-bar of said loading arms while container is tipped and unloaded.

24. A method according to claim 23 wherein, an operator actuates said rolling means from ground level to extend and retract said flexible cover over the open top of said demountable container when said container is supported by said vehicle bed.
